# EUROPÄISCHE PATENTANMELDUNG

(11) **EP 2 270 353 A2**
(43) Veröffentlichungstag der Anmeldung: **05.01.2011**
(21) Anmeldenummer: 10166985.1
(22) Anmeldetag: 23.06.2010
(51) Int. Cl.: F16D 69/02

(54) **Reibbelagmischung für einen Reibwerkstoff, insbesondere für Brems- und Kupplungsbeläge**

(30) Priorität: 30.06.2009 DE 202009008963 U; 04.03.2010 DE 202010003143 U
(71) Anmelder: Honeywell Bremsbelag GmbH, 21509 Glinde (DE)
(72) Erfinder: Schoo, Norbert, Dr., 21465 Reinbek (DE); Ernesti, Stephan, 22359 Hamburg (DE); Goldschmidt, Andreas, 22143 Hamburg (DE); Pfannebecker, Thomas, 22041 Hamburg (DE); Burmester, Gerhard, 21039 Hamburg (DE)
(74) Vertreter: Richter, Werdermann, Gerbaulet & Hofmann

(57) **Zusammenfassung**

Die Reibbelagmischung für einen Reibwerkstoff für Brems- und Kupplungsbeläge, wobei die Brems- und Kupplungsbeläge aus Metallfasern und/oder -pulver, funktionalen Füllstoffen, Schmierstoffen und organischen Verbindungen bestehen, enthält zur Steigerung der Leistungsfähigkeit der Reibpaarung metallisches und/oder legiertes und/oder gebundenes Zinn mit einem Gewichtsanteil von 0,5 bis 50,0 Gew.-%, vorzugweise 2,0 bis 10,0 Gew.-%, wobei der Kupferanteil an der Reibbelagmischung 0,001 bis 4,999 Gew.-%, bevorzugt 0,001 bis 0,499 Gew.-%, beträgt.

## Beschreibung

Die Erfindung betrifft eine Reibbelagmischung für einen Reibwerkstoff, insbesondere für Brems- und Kupplungsbeläge gemäß den Oberbegriffen der unabhängigen Ansprüche 1, 2 und 15.

Derartige Reibwerkstoffe werden beispielsweise für Brems- und Kupplungsbeläge, z. B. für den Einsatz in Kraftfahrzeugen, Schienenfahrzeugen oder auch Windkraftanlagen, benötigt. Darüber hinaus existiert eine Vielzahl anderer Anwendungen für derartige Reibwerkstoffe. Bekannte Reibwerkstoffrezepturen haben grundsätzlich folgenden schematischen Aufbau:
- Metallfasern und/oder -pulver
- Funktionale Füllstoffe (z. B. Glasfasern zur Verstärkung, Metalloxide als Reibwertgeber, etc.)
- Festschmierstoffe
- Organische Verbindungen (Harze, Kautschuk, Fasern, etc.)

Neben den technischen Anforderungen an die Reibwerkstoffentwicklung, wie üblicherweise die Steigerung der Leistungsfähigkeit, der Lebensdauer und der Komforteigenschaften, nehmen die Anforderungen bezüglich des Umweltschutzes an die Reibwerkstoffentwicklung einen immer bedeutenderen Stellenwert ein.

Durch die EP 0 654 616 B1 ist eine Reibbelagmischung für Brems- und Kupplungsbeläge bekannt, die zur Reduzierung der Rissanfälligkeit des Reibpartners anstelle der bis dahin üblichen Antimonsulfide Zinnsulfide enthält. Mit dem Einsatz von Zinnsulfiden anstelle der bis dahin üblichen Antimonsulfide in der Reibbelagmischung soll die bei hohen Spitzentemperaturbelastungen auftretende Oberflächenrissanfälligkeit des Reibpartners verringert werden.

Nach der DE-C1 153 670 ist der Einsatz von Molybdän-, Antimon-, Blei-, Zink-, Cadmium- und Zinnsulfiden in Reibbelagmischungen bekannt.

Die DE-AS 1 150 918 offenbart ein Verfahren zur Herstellung eines keramischen Reibkörpers für Bremsen oder Kupplungen, bei dem ein trockenes Gemisch aus 20 bis 50 Gewichtsteilen natürlicher oder künstlicher anorganischer Fasern, 20 bis 50 Gewichtsteilen einer niedrigschmelzenden Glasfritte aus Boraten, Silikaten, Phosphaten oder einem Gemisch davon, 10 bis 40 Gewichtsteilen eines Metallpulvergemisches, wobei das Metall aus Eisen oder Eisenmetallen, Kupfer, Bronze, Messing und/oder Zink besteht, sowie 0 bis 15 Gewichtsteilen gepulverten Graphits und/oder eines gepulverten Sulfides von Molybdän, Antimon, Blei, Zinn, Zink oder Cadmium oder gepulverten Bornitriden plastifiziert, mit etwa 1000 atü Druck zu Formkörpern verpresst, bei etwa 200° C getrocknet und sodann in Luft in einem zwischen 550° und 650° C liegenden Brennintervall gebrannt wird.

Die EP 0 093 673 B1 beschreibt eine Reibbelagmischung auf Eisenbasis. Neben 72 bis 85 Gewichtsprozent pulverförmigen Eisens umfasst die dortige Reibbelagmischung 3 bis 14 Gewichtsprozent Graphit, 2 bis 12 Gewichtsprozent Koks, 3 bis 10 Gewichtsprozent eines niedrig schmelzenden Materials, wie beispielsweise Zinn, und bis zu 3 Gewichtsprozent reibungsmodifizierenden Additives. Bei der Herstellung des Bremsbelages aus dieser Mischung verschmelzen das Eisen und das Zinn zu einer Legierung unter Bildung einer Matrix, in die der Graphit, der Koks und das Additiv in einer relativ fixen Position eingebettet sind. Das Verhältnis von Eisenpulver zu Zinn sollte etwa 12 zu 1 betragen.

Aus der EP 1 482 204 B1 ist eine Reibbelagmischung bekannt, die Fasern, Bindemittel und Füllstoff umfasst. Die Fasern sind Gemische aus Bronzefasern und anorganischen oder organischen Fasern. Die Bronzefasern werden hergestellt, indem sie mit Zinnsulfiden und metallischem Zinnpulver einem Vibrationsschneideverfahren unterzogen werden.

Das Vorhandensein von Kupfer, beispielsweise in der Bronze, in Reibbelagmischungen ist für die Performance, für die Verschleißeigenschaften sowie Lebensdauer (Staubemission) und Komfort erforderlich.

Die EP 1 681 489 offenbart eine Reibbelagmischung, die ein Phenolharz als Bindemittel umfasst, in das zwischen 1 und 10 Volumenprozent Eisenfasern eingebettet sind. Ferner enthält die Reibbelagmischung zwischen 1 und 5 Volumenprozent Aluminium, Zink, Zinn oder Gemische davon sowie ca. 4 Volumenprozent Antimonsulfid. Zinn kann in Pulverform oder als Faser eingesetzt werden, wobei Partikel des Zinnpulvers einen Nenndurchmesser von etwa 1,5 mm haben. Die Reibbelagmischung ist frei von Kupfer.

Die US 2009/0064896 A1 offenbart eine Reibbelagmischung, bei der eine In-situ-Bildung von Zinnsulfid stattfinden soll. Dazu enthält die Reibbelagmischung eine Schwefelquelle, typischerweise Eisen(II)-disulfid, eine Zinnquelle, typischerweise kolloidales Zinn(IV)-oxid. Dabei können die Eisendisulfidpartikel mit dem Zinnoxid beschichtet sein. Die Mischung kann ferner ein Reduktionsmittel wie Graphit enthalten. Das Reduktionsmittel reduziert das Zinnoxid zu metallischem Zinn, das dann wiederum mit der Schwefelquelle zu Zinnsulfid umgesetzt werden kann. Das Zinnsulfid wird während des Bremsvorganges bei Temperaturen von 600 bis 900 °C gebildet.

Es ist daher Aufgabe der Erfindung, eine Reibbelagmischung bereitzustellen, die für einen Reibwerkstoff für Brems- und Kupplungsbeläge geeignet ist, die einen sehr geringen Anteil an Kupfer enthält und mit der eine erhebliche Steigerung der Leistungsfähigkeit der Reibpaarung durch höhere und stabilere Brems- und Reibmomente erreicht wird, was letztendlich kürzere Bremswege zur Folge hat.

Zur Lösung dieser Aufgabe dienen die Merkmale der unabhängigen Ansprüche 1, 2 und 15.

Danach besteht die Erfindung in einer Reibbelagmischung gemäß der eingangs beschriebenen Art, die dadurch gekennzeichnet ist, dass die Reibbelagmischung zur Steigerung der Leistungsfähigkeit der Reibpaarung metallisches Zinn in einem Gewichtsanteil von 0,5 bis 50 Gew.-%, vorzugsweise 2,0 bis 10 Gew.-%, enthält, wobei der Kupferanteil an der Reibbelagmischung 0,001 bis 4,999 Gew.-%, vorzugsweise 0,001 bis 0,499 Gew.-%, beträgt.

Alternativ kann eine Reibbelagmischung vorgesehen sein, die eine oder mehrere Zinnlegierungen enthält, wobei das Zinn mit einem Gewichtsanteil von 0,5 bis 50 Gew.-%, vorzugsweise 2,0 bis 10 Gew.-%, bezogen auf die Reibbelagmischung, vorliegt, wobei der Kupferanteil an der Reibbelagmischung 0,001 bis 4,999 Gew.-%, vorzugsweise 0,001 bis 0,499 Gew.-%, beträgt.

Eine weitere erfindungsgemäße Alternative ist eine Reibbelagmischung zur Steigerung der Leistungsfähigkeit der Reibpaarung, die eine oder mehrere Zinnverbindungen enthält, welche vor oder während des Reibungsprozesses metallisches Zinn freisetzen. Gemäß dieser Alternative wird metallisches Zinn beispielsweise während des Reibungsprozesses z. B. aufgrund der Einwirkung der Reibungsenergie oder vor dem Reibungsprozess bei der Herstellung des Brems- oder Kupplungsbelages freigesetzt.

In einer weiteren erfindungsgemäßen Alternative enthält die Reibbelagmischung ein Gemisch aus zwei oder drei der folgenden Komponenten: metallisches Zinn, zumindest eine Zinnlegierung oder zumindest eine Zinnverbindung, welche vor oder während des Reibungsprozesses metallisches Zinn freisetzt.

Die vier erfindungsgemäßen Alternativen sind **dadurch gekennzeichnet, dass** sie metallisches Zinn enthalten oder - vor oder während des Reibprozesses - bilden können. Dazu enthalten die erfindungsgemäßen Reibbelagmischungen metallisches Zinn als solches oder als Zinnlegierung oder als Zinnverbindung, die metallisches Zinn freisetzen kann. Ferner enthalten die erfindungsgemäßen Reibbelagmischungen jeweils 0,001 bis 4,999 Gew.-%, vorzugsweise 0,001 bis 0,499 Gew.-% Kupfer.

Im Folgenden wird das Zinn, das als metallisches Zinn vorliegt, als metallisches Zinn bezeichnet, wenn dies zur Unterscheidung von Zinnlegierungen oder Zinnverbindungen notwendig ist. Das Zinn, das in einer Zinnlegierung enthalten ist, wird als legiertes Zinn bezeichnet. Das Zinn, das in einer Zinnverbindung vorliegt, die vor oder während des Reibungsprozesses metallisches Zinn freisetzen kann, wird als gebundenes Zinn bezeichnet. Der Ausdruck Zinn ohne das Attribut metallisch, legiert oder gebunden, bezeichnet den stöchiometrischen Zinnanteil an der Reibbelagmischung, und zwar unabhängig davon, ob das Zinn metallisches Zinn, legiertes Zinn oder gebundenes Zinn ist.

Überraschenderweise wurde gefunden, dass Reibwerkstoffe mit 0,001 bis 4,999 Gew.-% Kupfer und 0,5 Gew.-% bis 50,0 Gew.-% Zinn eine bessere Performance, Leistung, Reibwerthöhe und Reibwertstabilität aufweisen. Die Verwendung von Zinn anstelle von Kupfer führt überraschenderweise zu einer erheblichen Steigerung der Leistungsfähigkeit der Reibpaarung durch höhere und stabilere Brems- und Reibmomente und damit zu einer Verkürzung des Bremsweges.

Nach einer weiteren Ausführungsform der Erfindung besteht die Reibbelagmischung aus einem Anteil von 0 bis 70 Gew.% Metallen, 3 bis 50 Gew.% funktionalen Füllstoffen, 10 bis 45 Gew.% Schmierstoffen und 3 bis 25 Gew.% organischen Zusatzstoffen, wobei der Metallanteil metallisches, legiertes oder gebundenes Zinn mit einem Gewichtsanteil von 0,5 bis 50,0 Gew.%, vorzugsweise zwischen 2,0 und 10,0 Gew.%, und Kupfer mit einem Gewichtsanteil von 0,001 bis 4,999 Gew.-%, vorzugsweise von 0,001 bis 0,499 Gew.-%, umfasst. Eine vorteilhafte Ausgestaltung der Erfindung sieht vor, dass das Zinn metallisches und/oder legiertes und/oder gebundenes Zinn jeweils mit einem Gewichtsanteil von 0,5 bis 50,0 Gew.-%, vorzugsweise zwischen 2,0 und 10,0 Gew.-% enthalten, ist.

Der Anteil an Eisen in den erfindungsgemäßen Reibbelagmischungen beträgt vorzugsweise 10 bis 20 Vol.-% Eisen. Das Eisen liegt bevorzugt in Form von Stahlwolle vor.

Der Ausdruck "organische Zusatzstoffe" umfasst in der vorliegenden Erfindung auch Aramid- und/oder Zellulosefasern.

Die erfindungsgemäße Reibbelagmischung wird zur Herstellung eines Reibbelages, insbesondere zur Herstellung von Brems- und Kupplungsbelägen, verwendet. Dabei wirkt der Reibbelag mit einem Reibpartner zusammen. Der Reibpartner ist beispielsweise eine Scheibe oder Ringscheibe, an die der Reibbelag beim Bremsvorgang angedrückt wird. Der Reibpartner besteht beispielsweise aus Grauguss, einem Metall wie Aluminium oder Edelstahl, Keramik und/oder einem kohlefaserverstärktem Material.

Die erfindungsgemäßen Reibbelagmischungen können mittels der Verfahren hergestellt werden, die im Stand der Technik für die Herstellung von Reibbelagmischungen eingesetzt werden, wobei lediglich die Zusammensetzung der Komponenten gemäß der Erfindung variiert werden muss. Die Durchmischung der Komponenten kann mittels eines handelsüblichen Mischers erfolgen, so dass die Inhaltsstoffe homogen verteilt vorliegen. Eine bestimmte Reihenfolge bei der Zugabe der Komponenten ist nicht zu beachten. Auch können alle Komponenten gleichzeitig in den Mischer gegeben werden.

Weitere vorteilhafte Ausgestaltungen der Erfindung sind Gegenstand der Unteransprüche.

### A. Reibbelagmischung, enthaltend metallisches oder legiertes Zinn

Das metallische Zinn oder das legierte Zinn können in jeder beliebigen Modifikation vorliegen, beispielsweise als alpha-, beta-, gamma-Zinn, wobei beta-Zinn bevorzugt ist, obwohl auch die beiden anderen Zinnmodifikationen Vorteile bieten, so dass der Fachmann die Zinnmodifikation in Abhängigkeit von dem konkreten Einsatzzweck der Reibbelagmischung bestimmen wird. Alpha-Zinn bietet eine hohe Beständigkeit, während gamma-Zinn neben seiner hohen Beständigkeit aufgrund seiner Sprödigkeit leicht zu einem Pulver verarbeitet werden kann.

Liegt das Zinn in einer Zinnlegierung vor, so sollte die Zinnlegierung weder Cadmium noch Blei enthalten, da diese Substanzen nicht zugelassen sind. Der Begriff Zinnlegierungen umfasst alle Legierungen, die mit Zinn gebildet werden können, insbesondere binäre und ternäre Legierungen. Beispielhafte Legierungen sind Bronze (eine Zinn/Kupfer-Legierung), Babbitt-Metalle (mit 5 bis 80 Gew.-% Zinn und einem Gehalt an Kupfer und optional Antimon), Britannia-Metall (mit 70 bis 94 Gew.-% Zinn, 5 bis 16 Gew.-% Antimon und 0,2 bis 5 Gew.-% Kupfer) und Druckgusswerkstoffe (mit 49 bis 79 Gew.-% Zinn, 12 bis 18 Gew.-% Antimon, 3,5 bis 4,5 Gew.-% Kupfer).

Ein Beispiel einer Bronze ist eine Bronze, die 40 Gew.-% Zinn und 60 Gew.-% Kupfer enthält. Beispiele von Babbitt-Metallen sind beispielsweise ein Babbitt-Metall, das 90 Gew.-% Zinn und 10 Gew.-% Kupfer enthält, sowie ein Babbitt-Metall, das 89 Gew.-% Zinn, 7 Gew.-% Antimon und 4 Gew.-% Kupfer enthält.

Enthält die Reibbelagmischung metallisches Zinn oder legiertes Zinn, so liegen das metallische Zinn oder die Zinnlegierung als Pulver, Granulien, Fasern, kugelige, spratzige und/oder dendritische Partikel vor. Besonders bevorzugt liegen das metallische Zinn oder die Zinnlegierung in Form von kleinen Partikeln bzw. einer kleinen Körnung vor.

So sieht eine erste Ausführungsform eine Reibbelagmischung vor, in der das metallische Zinn oder die Zinnlegierung mit einer Korngrößenverteilung von 0,2 µm bis 600 µm mit einer spezifischen Oberfläche von 1,0 m²/g bis 1,5 m²/g enthalten ist.

Nach einer zweiten Ausführungsform weist die Körnung des metallischen Zinns oder der Zinnlegierung in der Reibbelagmischung eine Größe von 63 µm bis 125 µm auf.

Eine dritte Ausführungsform sieht eine Reibbelagmischung vor, in der das metallische Zinn oder die Zinnlegierung mit einer Korngrößenverteilung von 0,3 µm bis 200 µm mit einer spezifischen Oberfläche von 1,0 m²/g bis 1,5 m²/g enthalten ist.

Eine vierte Ausführungsform sieht eine Reibbelagmischung vor, in der das metallische Zinn oder die Zinnlegierung mit einer Korngrößenverteilung von 0,2 µm bis 200 µm mit einer spezifischen Oberfläche von 1,0 m²/g bis 1,5 m²/g enthalten ist.

Eine fünfte Ausführungsform sieht eine Reibbelagmischung vor, in der das metallische Zinn oder die Zinnlegierung mit einer Korngrößenverteilung von 0,5 µm bis 250 µm mit einer spezifischen Oberfläche von 1,0 m²/g bis 1,5 m²/g enthalten ist.

Besonders bevorzugt weist das metallische Zinn oder die Zinnlegierung in Pulverform folgende Korngrößenverteilung auf:
91 bis 95 Gew.-% Partikel kleiner als 45 µm
5 bis 10 Gew.-% Partikel von 45 µm bis 64 µm
0 bis 3 Gew.-% Partikel größer als 64 µm.

In einer weiteren Ausführungsform liegt das Zinn als Beschichtung oder Ummantelung von Kernen vor. Derartige Kerne sind beispielsweise Metallkerne, insbesondere Eisenkerne. Zweckmäßigerweise bilden die mit Zinn ummantelten oder beschichteten Kerne kugelförmige Formkörper, beispielsweise ein Granulat. Die Zinnummantelung oder Zinnbeschichtung kann aus metallischem Zinn oder einer Zinnlegierung gebildet sein.

Hinsichtlich der Korngrößenverteilung und spezifischen Oberfläche können die Metallkerne mit Zinnummantelung die in einer der ersten bis sechsten Ausführungsform beschriebenen Eigenschaften aufweisen.

Die hohe Feinkörnigkeit des in der Reibbelagmischung enthaltenen metallischen Zinns oder der Zinnlegierung ermöglicht, dass das Zinn in gleichmäßiger Verteilung im hergestellten Reibbelag vorliegt.

Schließlich kann das Zinn auch über Rezyklate, die metallisches Zinn oder Zinnlegierungen enthalten, in die Reibmetallmischungen eingebracht werden. Geeignete Rezyklate sind beispielsweise Weißblech, Stanniol, Lametta und Gemische derartiger Rezyklate. Dazu sollten die Rezyklate zweckmäßiger als Pulver, Granulien, Fasern oder Partikel bereitgestellt werden, die vorzugsweise die oben genannten Eigenschaften, beispielsweise im Hinblick auf die Korngrößenverteilung aufweisen.

### B. Reibbelagmischung, enthaltend Zinnverbindungen

Die Reibbelagmischung kann eine oder mehrere Zinnverbindungen enthalten, welche vor oder während des Reibungsprozesses metallisches Zinn freisetzen. Gemäß dieser Alternative wird metallisches Zinn beispielsweise während des Reibungsprozesses, z. B. aufgrund der Einwirkung der Reibungsenergie, oder vor dem Reibungsprozess bei der Herstellung des Brems- oder Kupplungsbelages freigesetzt.

Die Freisetzung des metallischen Zinns kann durch chemische, physikalische oder mechanische Einwirkung auf die Zinnverbindung im Reibwerkstoff während der Herstellung eines Brems- oder Kupplungsbelags oder im hergestellten Brems- oder Kupplungsbelag während eines Bremsvorgangs erreicht werden. Beispielsweise kann die beim Bremsvorgang erzeugte Wärme die Reduktion des gebundenen Zinns in der Zinnverbindung bewirken.

Zweckmäßigerweise enthält die Zinnverbindungen enthaltende Reibbelagmischung neben der oder den Zinnverbindungen geeignete Reduktionsmittel und gegebenenfalls geeignete Katalysatoren. Beispielsweise kann der in der Reibbelagmischung enthaltene Kohlenstoff als Reduktionsmittel dienen. Beispiele für geeignete Reduktionsmittel umfassen Koks, Graphit, Eisen (z. B. in Form von Stahlwolle und/oder Eisenpulver), Zink (z. B. Zinkpulver) oder Aluminium (z. B. Aluminiumpulver oder Aluminiumfasern) sowie Gemische dieser Reduktionsmittel.

Bevorzugte Zinnverbindungen sind Zinn(II)-oxid, Zinn(IV)-oxid (Zinndioxid), Zinn(II)-sulfat, (SnSO₄) oder Zinnsulfide, wie Zinn(II)-sulfid (SnS) oder Zinn(IV)-sulfid (SnS₂). Des Weiteren sollen auch Zinn-Verbindungen eingesetzt werden, bei denen durch beigemischte Katalysatoren und/oder andere Reaktionskomponenten innerhalb des Reibwerkstoffblockes, z. B. auch durch Wärme, die beim Bremsvorgang erzeugt wird, das Zinn freigegeben wird.

Ebenso bevorzugte Zinnverbindungen sind organische Zinnerverbindungen, die über eine thermische, chemische, katalytische oder mechanische Anregung, bei der Herstellung oder während der Anwendung im Reibmaterial, allein oder in Verbindung mit anderen Stoffen, metallisches Zinn freisetzen. Derartige organische Zinnverbindungen umfassen insbesondere Zinn(IV)-organische Verbindungen der allgemeinen Formel

R(ₙ₊₁)SnX₍₃₋ₙ₎,

wobei R aus der Gruppe ausgewählt ist, die Alkyl- und/oder Arylgruppen umfasst; X Wasserstoff, eine Hydroxy-, Halogen- oder Acyloxygruppe ist und n 0 oder eine ganze Zahl größer oder gleich 1 ist. Bevorzugte Verbindungen sind Mono- und Dialkylzinnverbindungen. Zinn(II)-organische Verbindungen sind ebenfalls geeignet. Die C-Sn-Bindung in organischen Zinnverbindungen ist stark polar und daher leichter spaltbar.

Besonders geeignete organische Zinnverbindungen sind insbesondere solche, die keine Sn-C-Bindungen enthalten. Besonders geeignet sind Zinnsalze organischer Säuren, beispielsweise Zinnoctoat und Zinnstearat.

Die Verwendung von Zinnverbindungen, bevorzugterweise von Zinnorganischen Verbindungen hat den Vorteil, dass metallisches Zinn in situ gebildet wird. Dieses in situ gebildete metallische Zinn ist besonders fein im hergestellten Reibbelag verteilt.

Die Erfindung wird nachstehend anhand von Beispielen unter Bezugnahme auf die Zeichnung näher erläutert. Weder die Beispiele noch die Zeichnung sollen die Erfindung in irgendeiner Form beschränken. Es zeigen:
- Fig. 1: eine schematische Querschnittsdarstellung eines kugelförmigen Formkörpers, dessen Kern mit einer Ummantelung aus Zinn be- schichtet ist;
- Fig. 2 bis Fig. 7: zeigen Diagramme, die die Reibwerte von erfindungsgemäßen Reibbelagmischungen und Vergleichsmischungen darstellen.

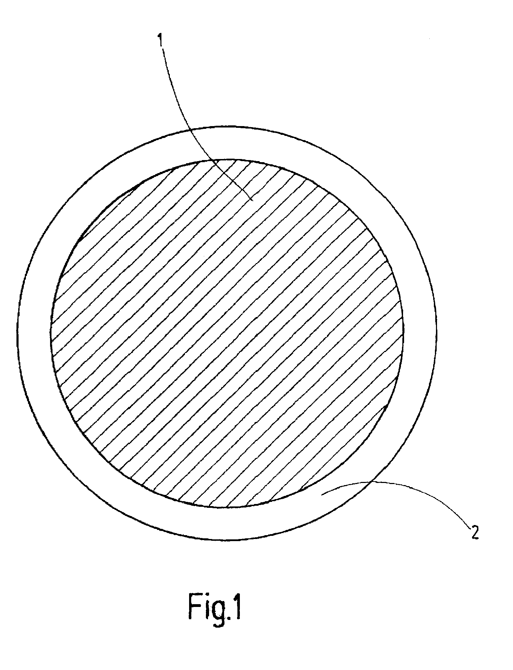

In Fig. 1 ist ein Beispiel eines kugelförmigen Formkörpers als Beispiel einer erfindungsgemäßen Ausführungsform gezeigt. Derartige Formkörper können genutzt werden, um metallisches Zinn oder legiertes Zinn über eine Zinnlegierung in die Reibbelagmischung einzubringen. Der gezeigte kugelförmige Formkörper weist einen Kern 1 aus Eisen und eine Ummantelung 2 aus Zinn auf.

Es wurden Reibbelagmischungen mit den in den Tabellen 1 bis 5 gezeigten Zusammensetzungen hergestellt. Die Zahlenangaben sind jeweils Angaben in Gewichtsprozent, die sich auf das Gewicht der hergestellten Reibbelagmischung beziehen.

### Ausführungsbeispiele

Die detaillierten Ausführungsbeispiele dienen ausschließlich zur Veranschaulichung und nicht zur irgendwie gearteten Einschränkung der Reichweite der Erfindung, deren Anwendung oder deren Gebrauch / Nutzen.

### Beispiel 1 (Zinn) und Vergleichsbeispiel 1 (Kupfer)

**Tabelle 1**

| Rohstoffe | Beispiel 1 Anteil in Gew.-% | Vergleichsbeispiel 1 Anteil in Gew.-% |
|---|---|---|
| Bindeharz | 7,0 | 7,0 |
| Kautschuk | 1,1 | 1,1 |
| Stahlwolle | 24,5 | 24,5 |
| Eisenpulver | 5,0 | 5,0 |
| Zinkpulver | 2,0 | 2,0 |
| Cellulosefaser | 1,4 | 1,4 |
| Zinn | 4,0 | - |
| Kupfer | - | 4,0 |
| Koks | 12,8 | 12,8 |
| Metallsulfide [Sn, Mn, Fe] | 14,5 | 14,5 |
| Flussspat | 2,0 | 2,0 |
| Metalloxide [Al, Cr, Fe] | 14,5 | 14,5 |
| Schwerspat | 9,0 | 9,0 |
| Reibstützer | 2,0 | 2,0 |
| Siliziumcarbid | 0,2 | 0,2 |

Mehrere der verwendeten Rohstoffe enthalten Spuren von Kupfer. Die Stahlwolle z. B. enthält typischerweise 0.045% Kupfer. Entsprechend enthält das Beispiel 0.011 % Kupfer.

Beispiel 1 / Vergleichsbeispiel 1 liegt Vergleichsuntersuchungen für die Anwendung Scheibenbremse in einem Pkw zugrunde.

### Beispiel 2 (Zinn) und Vergleichsbeispiel 2 (Kupfer)

**Tabelle 2**

| Rohstoffe | Beispiel 2 Anteil in Gew.-% | Vergleichsbeispiel 2 Anteil in Gew.-% |
|---|---|---|
| Bindeharz | 5,3 | 5,3 |
| Kautschuk | 2,0 | 2,0 |
| Stahlwolle | 35,6 | 35,6 |
| Glasfaser | 2,7 | 2,7 |
| Cellulosefaser | 2,5 | 2,5 |
| Zinn | 5,8 | - |
| Kupfer | - | 5,8 |
| Metallsilikat [Ca, Mg, Al, Fe] | 4,0 | 4,0 |
| Koks | 10,0 | 10,0 |
| Graphit | 7,3 | 7,3 |
| Metallsulfide [Sb, Sn, Zn] | 7,5 | 7,5 |
| Flussspat | 0,9 | 0,9 |
| Metalloxide [Al, Cr, Fe, Mg] | 16,3 | 16,3 |
| Siliziumcarbid | 0,1 | 0,1 |

Mehrere der verwendeten Rohstoffe enthalten Spuren von Kupfer. Die Stahlwolle z. B. enthält typischerweise 0.045% Kupfer. Entsprechend enthält das Beispiel 0.016% Kupfer.

Beispiel 2 / Vergleichsbeispiel 2 liegt Vergleichsuntersuchungen für die Anwendung Scheibenbremse in einem Lkw zugrunde.

### Beispiel 3 (Zinn) und Vergleichsbeispiel 3 (Kupfer)

**Tabelle 3**

| Rohstoffe | Beispiel 3 Anteil in Gew.-% | Vergleichsbeispiel 3 Anteil in Gew.-% |
|---|---|---|
| Bindeharz | 7.5 | 7.5 |
| Kautschuk | 1.3 | 1.3 |
| Stahlwolle | 35.4 | 35.4 |
| Mineralfaser | 0.9 | 0.9 |
| Cellulosefaser | 1.1 | 1.1 |
| Zinn | 8.0 | - |
| Kupfer | - | 8.0 |
| Messing | 1.0 | 1.0 |
| Metallsilikat [Mg, Al, Fe, K, Ca] | | |
| Koks | 9.7 | 9.7 |
| Graphit | 6.8 | 6.8 |
| Metallsulfide [Sb, Sn, Zn, Mo] | 7.6 | 7.6 |
| Flussspat | 0.2 | 0.2 |
| Metalloxide [Al, Cr, Fe, Mg] | 16.0 | 16.0 |
| Siliziumcarbid | 0.4 | 0.4 |

Mehrere der verwendeten Rohstoffe enthalten Spuren von Kupfer. Messing enthält typischerweise 60% Kupfer. Entsprechend enthält das Beispiel 0.6% Kupfer.

Beispiel 3 / Vergleichsbeispiel 3 liegt Vergleichsuntersuchungen für die Anwendung Scheibenbremse in einem Lkw zugrunde.

### Beispiel 4 (Zinnoxid) / Vergleichsbeispiel 2 (Kupfer)

**Tabelle 4**

| Rohstoffe | Beispiel 4 Anteil in Gew.-% | Vergleichsbeispiel 2 Anteil in Gew.-% |
|---|---|---|
| Bindeharz | 5.3 | 5.3 |
| Kautschuk | 2.0 | 2.0 |
| Stahlwolle | 34.0 | 35.6 |
| Glasfaser | 2.7 | 2.7 |
| Cellulosefaser | 2.5 | 2.5 |
| Kupfer | - | 5.8 |
| Zinn(IV)oxid | 7.4 | - |
| Metallsilikat [Ca, Mg, Al, Fe] | 4.0 | 4.0 |
| Koks | 10.0 | 10.0 |
| Graphit | 7.3 | 7.3 |
| Metallsulfide [Sb, Sn, Zn] | 7.5 | 7.5 |
| Flussspat | 0.9 | 0.9 |
| Metalloxide [Al, Cr, Fe, Mg] | 16.3 | 16.3 |
| Siliziumcarbid | 0.1 | 0.1 |

Mehrere der verwendeten Rohstoffe enthalten Spuren von Kupfer. Die Stahlwolle z. B. enthält typischerweise 0.045% Kupfer. Entsprechend enthält das Beispiel 0.015% Kupfer.

Beispiel 4 / Vergleichsbeispiel 2 liegt Vergleichsuntersuchungen für die Anwendung Scheibenbremse in einem Lkw zugrunde.

### Beispiel 5 (Zinnoxid) / Vergleichsbeispiel 2 (Kupfer)

**Tabelle 5**

| Rohstoffe | Beispiel 5 Anteil in Gew.-% | Vergleichsbeispiel 2 Anteil in Gew.-% |
|---|---|---|
| Bindeharz | 5.3 | 5.3 |
| Kautschuk | 2.0 | 2.0 |
| Stahlwolle | 34.0 | 35.6 |
| Glasfaser | 2.7 | 2.7 |
| Cellulosefaser | 2.5 | 2.5 |
| Kupfer | - | 5.8 |
| Zinkpulver | 6.4 | - |
| Zinn(IV)oxid | 7.4 | - |
| Metallsilikat [Ca, Mg, Al, Fe] | 4.0 | 4.0 |
| Koks | 6.3 | 10.0 |
| Graphit | 4.6 | 7.3 |
| Metallsulfide [Sb, Sn, Zn] | 7.5 | 7.5 |
| Flussspat | 0.9 | 0.9 |
| Metalloxide [Al, Cr, Fe, Mg] | 16.3 | 16.3 |
| Siliziumcarbid | 0.1 | 0.1 |

Mehrere der verwendeten Rohstoffe enthalten Spuren von Kupfer. Die Stahlwolle z. B. enthält typischerweise 0.045% Kupfer. Entsprechend enthält das Beispiel 0.015% Kupfer.

Beispiel 5 / Vergleichsbeispiel 2 liegt den Vergleichsuntersuchungen für die Anwendung Scheibenbremse in einem Lkw zugrunde.

### Versuchsergebnisse

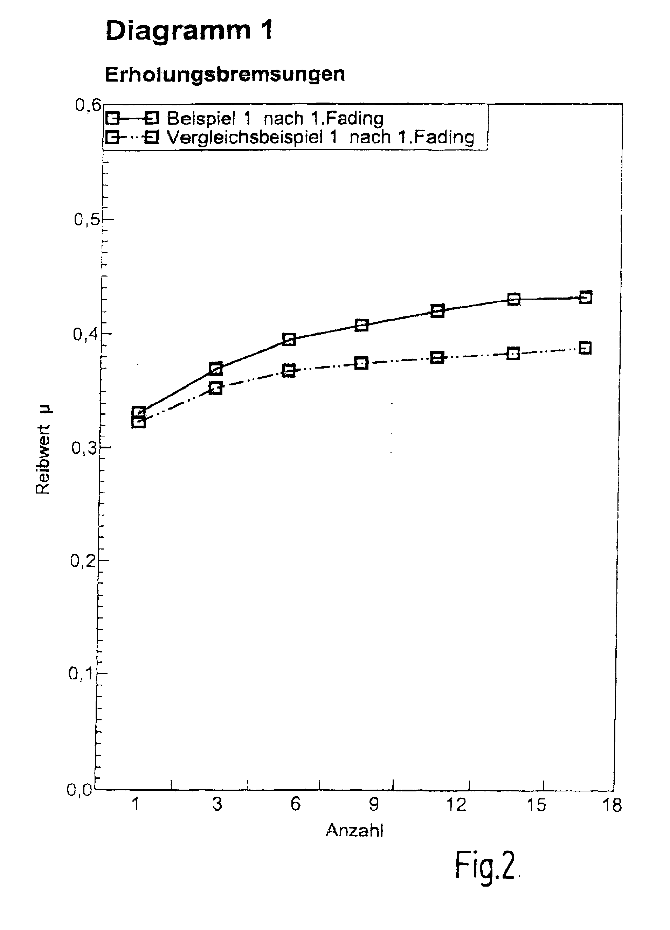

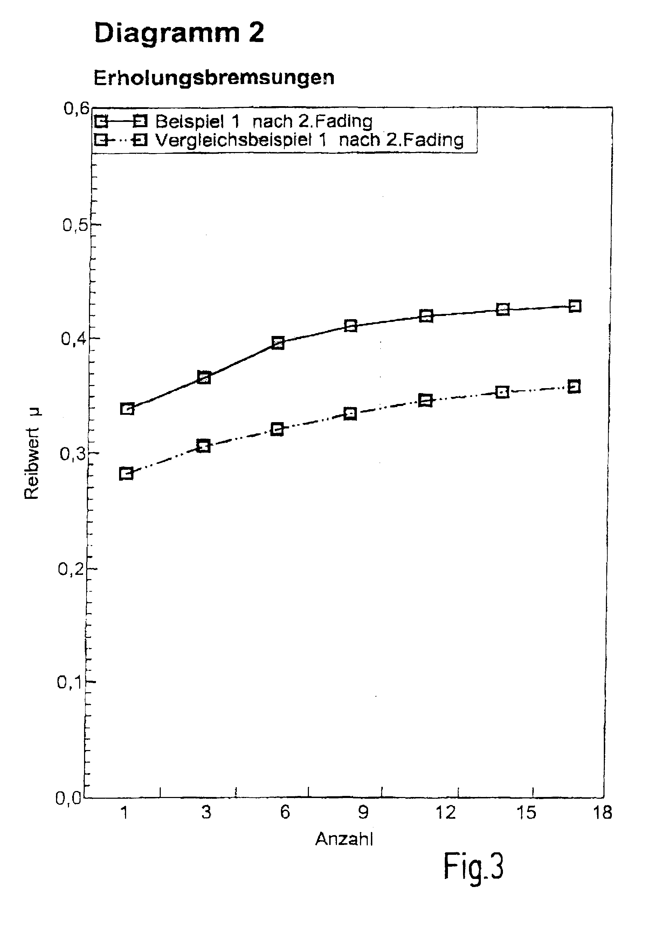

### Diagramm 1 und 2: Prüfstandsergebnis: Beispiel 1 / Vergleichsbeispiel 1, Auszug aus Leistungstest gemäß SAE J2522 (AK Master) - Fig. 2 und Fig. 3

In Diagramm 1 und 2 sind Reibwerte nach dem ersten und zweiten Fading gegen die Anzahl der Erholungsbremsungen dargestellt. Beispiel 1 liefert in allen Fällen höhere Reibwerte als Vergleichsbeispiel 1. Das Erholungsverhalten nach dem ersten und nach dem zweiten Fading ist für Beispiel 1 nahezu identisch. Vergleichsbeispiel 1 hingegen erreicht nach dem zweiten Fading nur niedrigere Reibwerte als nach dem ersten Fading. Somit liefert Beispiel 1 höhere und stabilere Reibwerte und folgerichtig kürzere Bremswege als Vergleichsbeispiel 1.

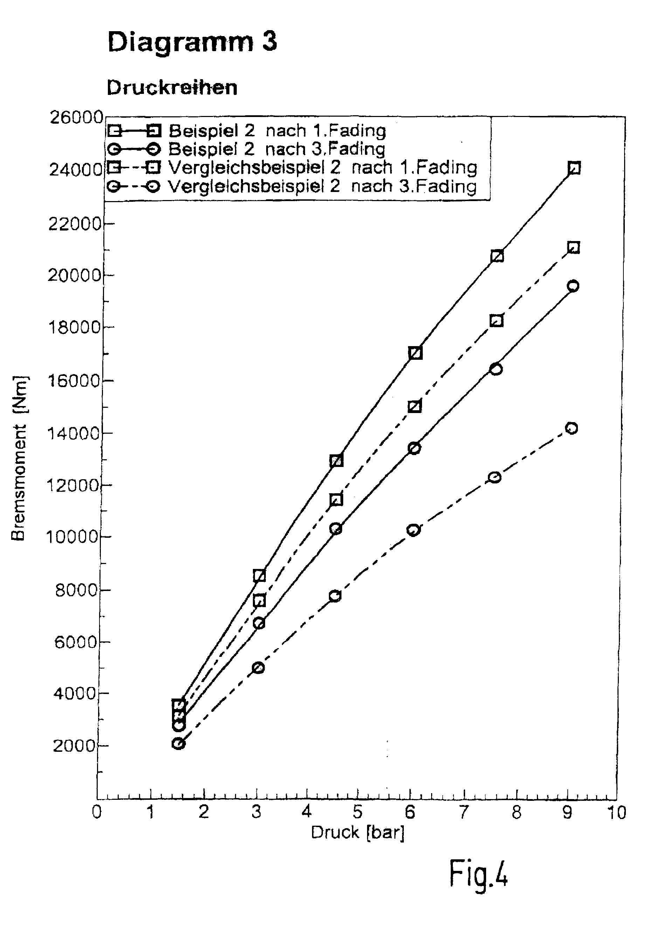

### Diagramm 3: Prüfstandsergebnis: Beispiel 2 / Vergleichsbeispiel 2, Auszug aus Leistungstest gemäß ISO 26865 - Fig. 4

Dargestellt sind Bremsmomente gegen Druck, so genannte Druckreihen. Hier insbesondere die Druckreihen nach dem ersten und dritten Fading. Beispiel 2 liefert bei allen Drücken höhere Bremsmomente als Vergleichsbeispiel 2. Der Bremsmomentabfall von nach dem ersten Fading zu nach dem dritten Fading fällt beim Beispiel 2 deutlich geringer aus als beim Vergleichsbeispiel 2. Somit liefert Beispiel 2 höhere und stabilere Bremsmomente und folgerichtig kürzere Bremswege als Vergleichsbeispiel 2.

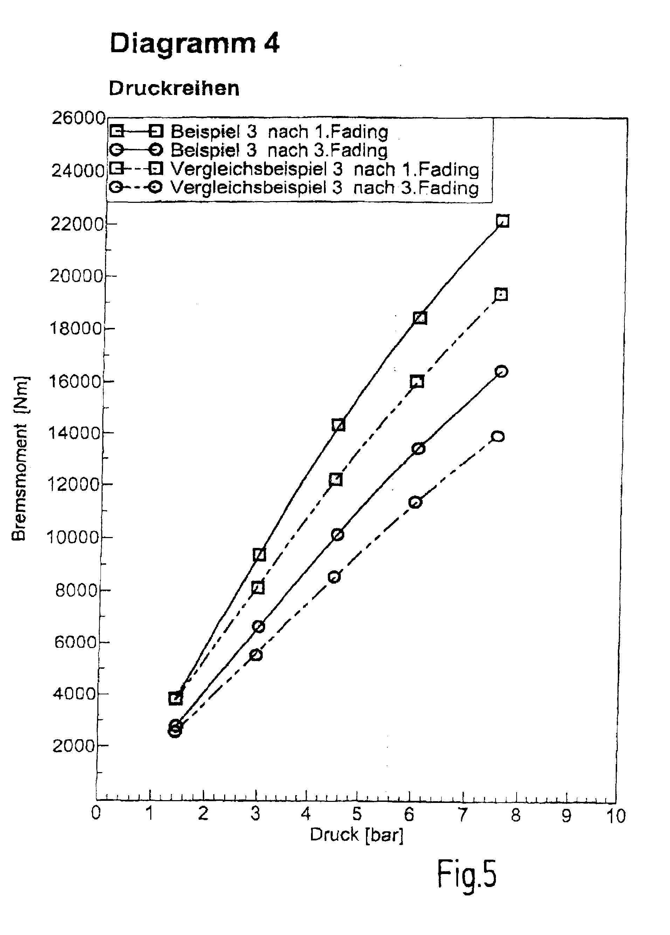

### Diagramm 4: Prüfstandsergebnis: Beispiel 3 / Vergleichsbeispiel 3, Auszug aus Leistungstest gemäß ISO 26865 - Fig. 5

Dargestellt sind Bremsmomente gegen Druck, so genannte Druckreihen. Hier insbesondere die Druckreihen nach dem ersten und dritten Fading. Beispiel 3 liefert bei allen Drücken höhere Bremsmomente als Vergleichsbeispiel 3. Somit liefert Beispiel 3 höhere Bremsmomente und folgerichtig kürzere Bremswege als Vergleichsbeispiel 3.

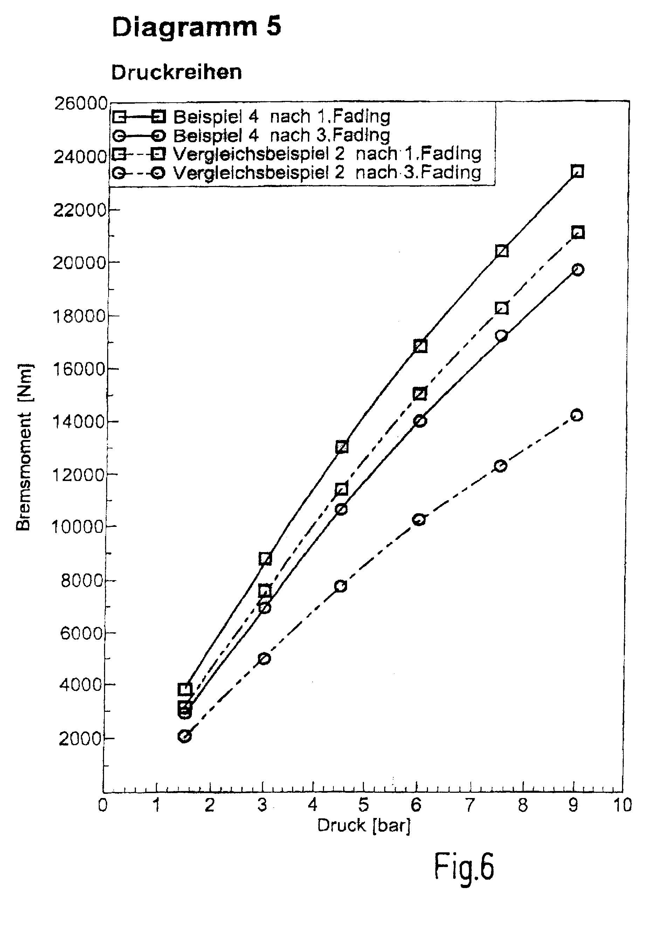

### Diagramm 5: Prüfstandsergebnis: Beispiel 4 / Vergleichsbeispiel 2, Auszug aus Leistungstest gemäß ISO 26865 - Fig. 6

Dargestellt sind Bremsmomente gegen Druck, so genannte Druckreihen. Hier insbesondere die Druckreihen nach dem ersten und dritten Fading. Beispiel 4 liefert bei allen Drücken höhere Bremsmomente als Vergleichsbeispiel 2. Der Bremsmomentabfall von nach dem ersten Fading zu nach dem dritten Fading fällt beim Beispiel 4 deutlich geringer aus als beim Vergleichsbeispiel 2. Somit liefert Beispiel 4 höhere und stabilere Bremsmomente und folgerichtig kürzere Bremswege als Vergleichsbeispiel 2.

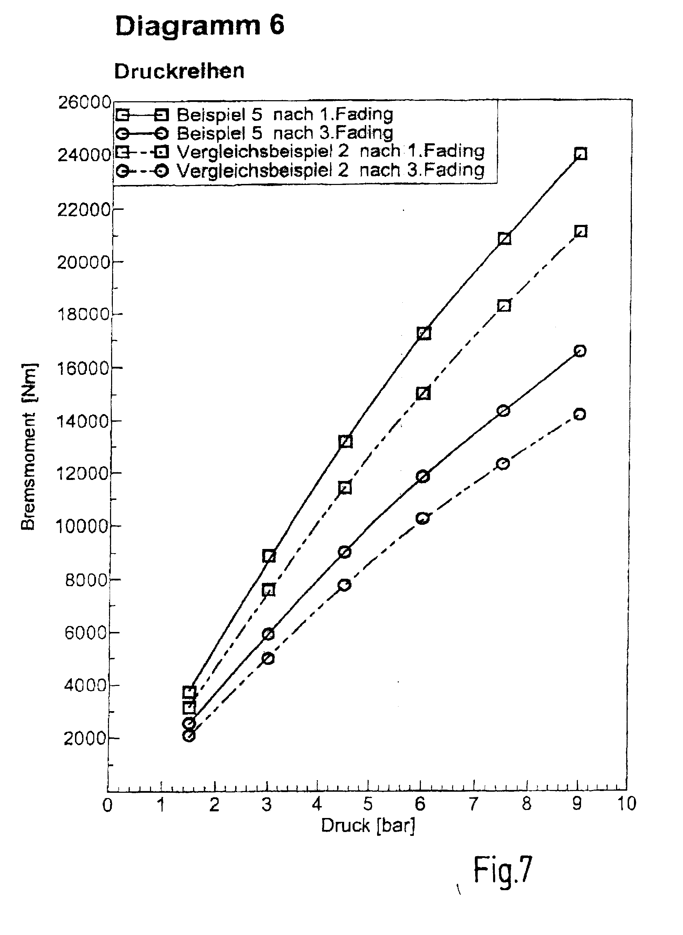

### Diagramm 6: Prüfstandsergebnis: Beispiel 5 / Vergleichsbeispiel 2, Auszug aus Leistungstest gemäß ISO 26865 - Fig. 7

Dargestellt sind Bremsmomente gegen Druck, so genannte Druckreihen. Hier insbesondere die Druckreihen nach dem ersten und dritten Fading. Beispiel 5 liefert bei allen Drücken höhere Bremsmomente als Vergleichsbeispiel 2. Somit liefert Beispiel 5 höhere Bremsmomente und folgerichtig kürzere Bremswege als Vergleichsbeispiel 2.

## Patentansprüche

1. Organisch gebundene Reibbelagmischung für mit einem Reibpartner zusammenwirkende Brems- und Kupplungsbeläge, wobei die Brems- und Kupplungsbeläge aus Metallfasern und/oder -pulver, funktionalen Füllstoffen, Schmierstoffen und organischen Verbindungen bestehen,
**dadurch gekennzeichnet,**
**dass** die Reibbelagmischung zur Steigerung der Leistungsfähigkeit der Reibpaarung metallisches Zinn mit einem Gewichtsanteil von 0,5 bis 50,0 Gew.%, vorzugsweise 2,0 bis 10,0 Gew.-% enthält, wobei der Kupferanteil an der Reibbelagmischung 0,001 bis 4,999 Gew.-%, bevorzugt 0,001 bis 0,499 Gew.-%, beträgt.

2. Organisch gebundene Reibbelagmischung für mit einem Reibpartner zusammenwirkende Brems- und Kupplungsbeläge, wobei die Brems- und Kupplungsbeläge aus Metallfasern und/oder -pulver, funktionalen Füllstoffen, Schmierstoffen und organischen Verbindungen bestehen,
**dadurch gekennzeichnet,**
**dass** die Reibbelagmischung zur Steigerung der Leistungsfähigkeit der Reibpaarung eine oder mehrere Zinnlegierungen enthält, wobei das Zinn mit einem Gewichtsanteil von 0,5 bis 50,0 Gew.-%, vorzugsweise 2,0 bis 10 Gew.-%, bezogen auf die Reibbelagmischung, vorliegt, wobei der Kupferanteil an der Reibbelagmischung 0,001 bis 4,999 Gew.-%, bevorzugt 0,001 bis 0,499 Gew.-%, beträgt.

3. Reibbelagmischung nach Anspruch 1 oder Anspruch 2,
**dadurch gekennzeichnet,**
**dass** das metallische Zinn oder die Zinnlegierung als Pulver mit einer Korngrößenverteilung von 0,2 µm bis 600 µm und mit einer spezifischen Oberfläche von 1,0 m²/g bis 1,5 m²/g in der Reibbelagmischung enthalten ist.

4. Reibbelagmischung nach Anspruch 1 oder Anspruch 2,
**dadurch gekennzeichnet,**
**dass** das metallische Zinn oder die Zinnlegierung als Pulver vorliegt, wobei die Körnung des Pulvers eine Größe von 63 µm bis 125 µm aufweist.

5. Reibbelagmischung nach Anspruch 1 oder Anspruch 2,
**dadurch gekennzeichnet,**
**dass** das metallische Zinn oder die Zinnlegierung als Pulver mit einer Korngrößenverteilung von 0,3 µm bis 200 µm und mit einer spezifischen Oberfläche von 1,0 m²/g bis 1,5 m²/g in der Reibbelagmischung enthalten ist.

6. Reibbelagmischung nach Anspruch 1 oder Anspruch 2,
**dadurch gekennzeichnet,**
**dass** das metallische Zinn oder die Zinnlegierung als Pulver mit einer Korngrößenverteilung von 0,2 µm bis 200 µm und mit einer spezifischen Oberfläche von 1,0 m²/g bis 1,5 m²/g in der Reibbelagmischung enthalten ist.

7. Reibbelagmischung nach Anspruch 1 oder Anspruch 2,
**dadurch gekennzeichnet,**
**dass** das metallische Zinn oder die Zinnlegierung als Pulver mit einer Korngrößenverteilung von 0,5 µm bis 250 µm und mit einer spezifischen Oberfläche von 1,0 m²/g bis 1,5 m²/g in der Reibbelagmischung enthalten ist.

8. Reibbelagmischung nach einem der Ansprüche 1 bis 7,
**dadurch gekennzeichnet, dass**
das metallische Zinn oder die Zinnlegierung in Pulverform folgende Korngrößenverteilung aufweist:
91 bis 95 Gew.-% Partikel kleiner als 45 µm
5 bis 10 Gew.-% Partikel von 45 µm bis 64 µm
0 bis 3 Gew.-% Partikel größer als 64 µm.

9. Reibbelagmischung nach einem der vorstehenden Ansprüche 1 bis 8,
**dadurch gekennzeichnet,**
**dass** die Reibbelagmischung kugelförmige Formkörper enthält, die einen Kern (1) und eine Ummantelung (2) aufweisen, wobei die Ummantelung aus metallischem Zinn oder einer Zinnlegierung besteht.

10. Reibbelagmischung nach einem der vorstehenden Ansprüche 1 bis 9,
**dadurch gekennzeichnet,**
**dass** sie folgende Zusammensetzung in Gewichtsprozent, bezogen auf die Reibbelagmischung, aufweist:
| | |
|---|---|
| Bindeharz | 7,0 |
| Kautschuk | 1,1 |
| Stahlwolle | 24,5 |
| Eisenpulver | 5,0 |
| Zinkpulver | 2,0 |
| Cellulosefaser | 1,4 |
| Zinn | 4,0 |
| Koks | 12,8 |
| Metallsulfide [Sn, Mn, Fe] | 14,5 |
| Flussspat | 2,0 |
| Metalloxide [Al, Cr, Fe] | 14,5 |
| Schwerspat | 9,0 |
| Reibstützer | 2,0 |
| Siliziumcarbid | 0,2. |

11. Reibbelagmischung nach einem der vorstehenden Ansprüche 1 bis 9,
**dadurch gekennzeichnet,**
**dass** sie folgende Zusammensetzung in Gewichtsprozent, bezogen auf die Reibbelagmischung, aufweist:
| | |
|---|---|
| Bindeharz | 5,3 |
| Kautschuk | 2,0 |
| Stahlwolle | 35,6 |
| Glasfaser | 2,7 |
| Cellulosefaser | 2,5 |
| Zinn | 5,8 |
| Metallsilikat [Ca, Mg, Al, Fe] | 4,0 |
| Koks | 10,0 |
| Graphit | 7,3 |
| Metallsulfide [Sb, Sn, Zn] | 7,5 |
| Flussspat | 0,9 |
| Metalloxide [Al, Cr, Fe, Mg] | 16,3 |
| Siliziumcarbid | 0,1. |

12. Reibbelagmischung nach einem der vorstehenden Ansprüche 1 bis 9,
**dadurch gekennzeichnet,**
**dass** sie folgende Zusammensetzung in Gewichtsprozent, bezogen auf die Reibbelagmischung, aufweist:
| | |
|---|---|
| Bindeharz | 7,5 |
| Kautschuk | 1,3 |
| Stahlwolle | 35,4 |
| Mineralfaser | 0,9 |
| Cellulosefaser | 1,1 |
| Zinn | 8,0 |
| Messing | 1,0 |
| Metallsilikat [Mg, Al, Fe, K, Ca] | 4,1 |
| Koks | 9,7 |
| Metallsulfide [Sb, Sn, Zn, Mo] | 7,6 |
| Flussspat | 0,2 |
| Metalloxide [Al, Cr, Fe, Mg] | 16,0 |
| Graphit | 6,8 |
| Siliziumcarbid | 0,4. |

13. Reibbelagmischung nach einem der vorstehenden Ansprüche 1 bis 12,
**dadurch gekennzeichnet,**
**dass** das metallische Zinn oder die Zinnlegierung aus Zinnrezyklaten stammt.

14. Reibbelagmischung nach einem der vorstehenden Ansprüche 1 bis 13,
**dadurch gekennzeichnet,**
**dass** das metallische Zinn oder die Zinnlegierung als Pulver, Granulien, Fasern, kugelige, spratzige und/oder dendritische Partikel oder Gemische davon vorliegt.

15. Organisch gebundene Reibbelagmischung für mit einem Reibpartner zusammenwirkende Brems- und Kupplungsbeläge, wobei die Brems- und Kupplungsbeläge aus Metallfasern und/oder -pulver, funktionalen Füllstoffen, Schmierstoffen und organischen Verbindungen bestehen,
**dadurch gekennzeichnet,**
**dass** die Reibbelagmischung zur Steigerung der Leistungsfähigkeit der Reibpaarung eine oder mehrere Zinnverbindungen enthält, wobei der Kupferanteil an der Reibbelagmischung 0,001 bis 4,999 Gew.-%, bevorzugt 0,001 bis 0,499 Gew.-%, beträgt.

16. Reibbelagmischung nach Anspruch 15,
**dadurch gekennzeichnet,**
**dass** die Zinnverbindung aus der Gruppe ausgewählt ist, die Zinn(II)-oxid, Zinn(IV)-oxid, Zinn(II)-sulfat, Zinn(II)-sulfid, Zinn(IV)-sulfid, zinnorganische Verbindungen sowie Gemische davon umfasst.

17. Reibbelagmischung nach Anspruch 16,
**dadurch gekennzeichnet,**
**dass** sie folgende Zusammensetzung in Gewichtsprozent, bezogen auf die Reibbelagmischung, aufweist:
| | |
|---|---|
| Bindeharz | 5,3 |
| Kautschuk | 2,0 |
| Stahlwolle | 34,0 |
| Glasfaser | 2,7 |
| Cellulosefaser | 2,5 |
| Zinn(IV)oxid | 7,4 |
| Metallsilikat [Ca, Mg, AI, Fe] | 4,0 |
| Koks | 10,0 |
| Graphit | 7,3 |
| Metallsulfide [Sb, Sn, Zn] | 7,5 |
| Flussspat | 0,9 |
| Metalloxide [AI, Cr, Fe, Mg] | 16,3 |
| Siliziumcarbid | 0,1. |

18. Reibbelagmischung nach Anspruch 16,
**dadurch gekennzeichnet,**
**dass** sie folgende Zusammensetzung in Gewichtsprozent, bezogen auf die Reibbelagmischung, aufweist:
| | |
|---|---|
| Bindeharz | 5,3 |
| Kautschuk | 2,0 |
| Stahlwolle | 34,0 |
| Glasfaser | 2,7 |
| Cellulosefaser | 2,5 |
| Zinkpulver | 6,4 |
| Zinn(IV)oxid | 7,4 |
| Metallsilikat [Ca, Mg, Al, Fe] | 4,0 |
| Koks | 6,3 |
| Graphit | 4,6 |
| Metallsulfide [Sb, Sn, Zn] | 7,5 |
| Flussspat | 0,9 |
| Metalloxide [Al, Cr, Fe, Mg] | 16,3 |
| Siliziumcarbid | 0,1. |

19. Reibbelagmischung nach einem der vorhergehenden Ansprüche, **dadurch gekennzeichnet,**
**dass** die Reibbelagmischung aus einem Anteil von 0 bis 70 Gew.% Metallen, 3 bis 50 Gew.% funktionalen Füllstoffen, 10 bis 45 Gew.% Schmierstoffen und 3 bis 25 Gew.% organischen Zusatzstoffen, einschließlich Aramid- und/oder Zellulosefasern, besteht, wobei in dem Metallanteil Zinn mit einem Gewichtsanteil von 0,5 bis 50,0 Gew.%, vorzugsweise zwischen 2,0 und 10,0 Gew.%, und Kupfer mit einer Gewichtsanteil von 0,001 bis 4,999 Gew.-%, bevorzugt 0,001 bis 0,499 Gew.-%, enthalten ist.

20. Reibbelagmischung nach Anspruch 19,
**dadurch gekennzeichnet,**
**dass** das Zinn metallisches und/oder legiertes und/oder gebundenes Zinn jeweils mit einem Gewichtsanteil von 0,5 bis 50,0 Gew.-%, vorzugsweise zwischen 2,0 und 10,0 Gew.-% ist.

21. Verwendung einer Reibbelagmischung für einen Reibwerkstoff für Brems- und Kupplungsbeläge mit einem sehr geringen Anteil an Kupfer nach den Ansprüchen 1 bis 20 zur Steigerung der Leistungsfähigkeit der Reibpaarung durch höhere und stabile Brems- und Reibmomente zur Erzielung kürzerer Bremswege.
